(19) Europäisches Patentamt
European Patent Office
Office européen des brevets

(11) **EP 3 852 275 A1**

(12) **EUROPEAN PATENT APPLICATION**

(43) Date of publication:
**21.07.2021 Bulletin 2021/29**

(51) Int Cl.:
*H03M 13/11* (2006.01)  *G06F 21/62* (2013.01)

(21) Application number: **21151347.8**

(22) Date of filing: **13.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **15.01.2020   CN 202010041997**

(71) Applicant: **YottaChain Foundation Ltd.**
**Singapore 139950 (SG)**

(72) Inventor: **WANG, Donglin**
**139950 Singapore (SG)**

(74) Representative: **ABG Intellectual Property Law, S.L.**
**Avenida de Burgos, 16D**
**Edificio Euromor**
**28036 Madrid (ES)**

(54) **METHOD, DEVICE AND APPARATUS FOR STORING DATA, COMPUTER READABLE STORAGE MEDIUM**

(57)     The present application provides a method, a device (400) and an apparatus (500) for storing data, and a computer readable storage medium. The method includes: dividing the data into X data fragments for forming an array including m rows and n columns, each of the rows including at least one and at most n data fragments, and each of the columns including at least one and at most m data fragments; encoding at least one of the data fragments in the each of the rows using an error correction code encoding algorithm to obtain M row check fragments, and encoding at least one of the data fragments in the each of the columns using an error correction code encoding algorithm to obtain N column check fragments, wherein M≥m, N≥n; and storing the X data fragments, the M row check fragments and the N column check fragments.

EP 3 852 275 A1

**Description**

TECHNICAL FIELD

The present application relates to the field of information technologies, particularly to a method, a device and an apparatus for storing data, and a computer readable storage medium.

BACKGROUND

Error correction coding algorithms used in data storage generally follow error correction coding algorithms in the communication field, which only focus on error tolerance and correction capabilities of coding, but do not meet performance requirements during data reconstruction. During data reconstruction, it is generally necessary to read all undamaged data fragments and enough check fragments to recover damaged data fragments, which results in lower data reconstruction performance and greater loss of network bandwidth during reconstruction.

SUMMARY

In view of this, at least one embodiment of the present application is directed to providing a method, a device and an apparatus for storing data, and a computer readable storage medium, which can recover damage data fragments by reading only a very small number of data fragments in most cases.

According to one aspect of the present application, a method for storing data is provided, which includes: dividing the data into X data fragments, the X data fragments forming an array including m rows and n columns, each of the rows including at least one and at most n data fragments, and each of the columns including at least one and at most m data fragments, wherein X, m, n are all positive integers greater than or equal to 2; encoding at least one of the data fragments in the each of the rows using an error correction code encoding algorithm to obtain at least one row check fragment, a total of M row check fragments being obtained, and encoding at least one of the data fragments in the each of the columns using an error correction code encoding algorithm to obtain at least one column check fragment, a total of N column check fragments being obtained, wherein $M \geq m$, $N \geq n$; and storing the X data fragments, the M row check fragments and the N column check fragments.

In a special embodiment of the present application, the method further includes: in a case one of the X data fragments located in row i is damaged, recovering the damaged data fragment by the undamaged data fragment(s) of row i and the row check fragment of row i, using the error correction code decoding algorithm of row i; or, in a case one of the X data fragments located in column j is damaged, recovering the damaged data fragment by the undamaged data fragment(s) of column j and the column check fragment of column j, using the error correction code decoding algorithm of column j.

In a special embodiment of the present application, the storing the X data fragments, the M row check fragments and the N column check fragments, includes: storing the X data fragments, the M row check fragments and the N column check fragments in different nodes, respectively.

In a special embodiment of the present application, the error correction code includes at least one of Golay code, Reed-Solomon code, Reed-Muller code, Bose-Chaudhuri-Hocquenghem code, Low Density Parity Check code, Convolutional code, and Turbo code.

In a special embodiment of the present application, the Reed-Solomon code is generated in a finite field GF (256).

In a special embodiment of the present application, the method further includes: obtaining a hash value for each of the X data fragments; storing the hash value; and when reading a data fragment, obtaining the hash value of read data and comparing with stored hash value to obtain a comparing result, and judging the data fragment as damaged if the comparing result is not equal.

In a special embodiment of the present application, the method further includes: encoding the X data fragments using an error correction code encoding algorithm to obtain x global check fragments; and storing the x global check fragments.

In a special embodiment of the present application, the method further includes: encoding the x global check fragments using an error correction code encoding algorithm to obtain at least one local check fragment of global check codes; and storing the at least one local check fragment.

In a special embodiment of the present application, the method further includes: calculating the M row check fragments and/or the N column check fragments to obtain y global check fragments.

In a special embodiment of the present application, the encoding at least one of the data fragments in the each of the rows uses an error correction code encoding algorithm to obtain at least one row check fragment, a total of M row check fragments is obtained, and encoding at least one of the data fragments in the each of the columns using an error correction code encoding algorithm to obtain at least one column check fragment, a total of N column check fragments is obtained, wherein M≥m, N≥n, includes: calculating the row check fragment and the column check fragment respectively by using different segments of an encoding matrix of at least one local check code.

The error correction code encoding algorithm is used to calculate an encoding result based on an encoding matrix. The segments used in encoding cover multiple row/column check codes of a complete encoding matrix in total, and the global check code corresponding to the encoding matrix can be obtained after calculation. For example, the encoding algorithm is a polynomial over a finite field. Each global check code is calculated using an mxn encoding matrix. Each of the rows of an encoding matrix of a global check code is used to form a 1xn encoding matrix to calculate a row check code, and the global check code can be calculated by adding these row check codes with a finite field addition. In the same way, each of the columns of another encoding matrix is used to form an mx1 encoding matrix to calculate a column check code, and another global check code can be calculated by adding these column check codes with a finite field addition.

In a special embodiment of the present application, the method further includes: in a case one of the X data fragments is damaged, recovering the damaged data fragment by the undamaged data fragment(s) and at least one of the global check fragments, using the decoding algorithm of error correction code for the global check fragments.

In another aspect, a device for storing data is provided by the present application, which includes: a dividing module, configured to divide the data into X data fragments, the X data fragments forming an array including m rows and n columns, each of the rows including at least one and at most n data fragments, and each of the columns including at least one and at most m data fragments, wherein X, m, n are all positive integers greater than or equal to 2; an encoding module, configured to encode at least one of the data fragments in the each of the rows using an error correction code encoding algorithm to obtain at least one row check fragment, a total of M row check fragments being obtained, and encode at least one of the data fragments in the each of the columns using an error correction code encoding algorithm to obtain at least one column check fragment, a total of N column check fragments being obtained, wherein M≥m, N≥n; and a storing module, configured to store the X data fragments, the M row check fragments and the N column check fragments.

In another aspect, a computer readable storage medium is provided by the present application. The storage medium stores a computer program, and the computer program is configured to execute the method for storing data described above.

In another aspect, an apparatus for storing data is provided by the present application. The apparatus for storing data includes: a processor; and a memory, configured to store executable instructions of the processor. The processor is configured to execute the method for storing data described above.

According to a method for storing data of the present application, by generating check fragments in two dimensions of rows and columns, data fragments may be read and recovered in multiple dimensions, which not only increases the number of data fragments that can be recovered, but also reduces the number of data fragments that need to be read, thereby improving storage efficiency.

BRIEF DESCRIPTION OF DRAWINGS

FIG. 1 is a flowchart illustrating a method for storing data according to an embodiment of the present application;
FIG. 2 is a data fragment array according to an embodiment of the present application;
FIG. 3 is a global check fragment according to an embodiment of the present application;
FIG. 4 is a schematic structural block diagram illustrating a device for storing data according to an embodiment of the present application; and
FIG. 5 is a schematic structural block diagram illustrating an apparatus for storing data according to an embodiment of the present application.

DETAILED DESCRIPTION

In order for those skilled in the art to understand concepts and ideas of the present application more clearly, the present application is described in detail below with reference to specific embodiments. It should be understood that the embodiments given herein are only a part of all the embodiments that the present application may have. After reading the description of the present application, those skilled in the art have the ability to make improvements, modifications, or replacements to part or the whole of the following embodiments, and these improvements, modifications, or replacements are also included in the protection scope of the present application.

Herein, the terms "first", "second" and other similar words are not intended to imply any order, quantity, and importance, but are only used to distinguish different elements. In this article, the terms "a(n)", "one", and other similar words are not intended to indicate that only one of the things is present, but rather that the description is directed to only one of the things, which may have one or more. In this article, the terms "comprising", "including" and other similar words are intended to indicate logical interrelationships, and should not be viewed as representing spatial structure relations. For example, "A includes B" is intended to mean that logically B belongs to A, and not that B is located inside A in space. In addition, the meanings of the terms "comprising", "including" and other similar words should be considered open rather than closed. For example, "A includes B" is intended to mean that B belongs to A, but B does not necessarily constitute all of A. A may also include other elements such as C, D, and E.

In this article, the terms "embodiment", "this embodiment", "an embodiment", "one embodiment" do not mean that the description applies to only a specific embodiment, but mean that the description may also apply to one or more other embodiments. Those skilled in the art should understand that, in this article, any description made for one embodiment may be substituted, combined, or otherwise integrated with the relevant description in another embodiment or embodiments. New embodiments produced by the substitution, combination or otherwise integration can be easily conceived by those skilled in the art and belongs to the protection scope of the present application.

In some embodiments of the present application, data may refer to symbols that may record and discriminate objective events, and are physical symbols that record the nature, state and interrelationships of objective things, or a combination of these physical symbols, such as numbers, text, letters, graphics, images, video, audio, etc. In some embodiments of the present application, storing data may refer to storing the data in a certain medium, and being able to read the data at any time in the future.

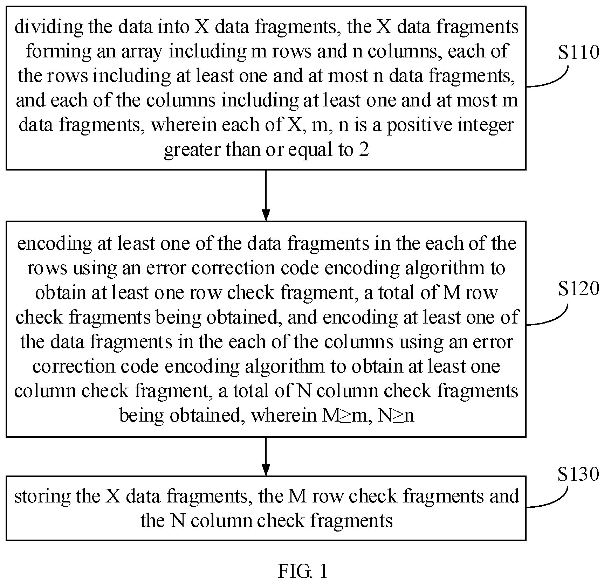

FIG. 1 shows a flowchart illustrating a method for storing data according to an embodiment of the present application. The method for storing data of FIG. 1 may be performed by a computing device (eg, a server).

As shown in FIG. 1, the method for storing data according to this embodiment includes:

S110, dividing the data into X data fragments, the X data fragments forming an array including m rows and n columns, each of the rows including at least one and at most n data fragments, and each of the columns including at least one and at most m data fragments, wherein each of X, m, n is a positive integer greater than or equal to 2;

S120, encoding at least one of the data fragments in the each of the rows using an error correction code encoding algorithm to obtain at least one row check fragment, a total of M row check fragments being obtained, and encoding at least one of the data fragments in the each of the columns using an error correction code encoding algorithm to obtain at least one column check fragment, a total of N column check fragments being obtained, wherein $M \geq m$, $N \geq n$;

S130, storing the X data fragments, the M row check fragments and the N column check fragments.

According to the method for storing data of this embodiment, by generating check fragments in two dimensions of rows and columns, data fragments may be read and recovered in multiple dimensions, which not only increases the number of data fragments that can be recovered, but also reduced the number of data fragments that need to be read, thereby improving storage efficiency.

In this embodiment, a data fragment may refer to a part of data having a certain amount of data, and all data fragments can be combined to form original data. The amount of data in different data fragments can be the same or different. An array may refer to a whole formed by a plurality of elements arranged according to a certain rule. Array elements can be aligned in a certain direction, such as aligned along rows and columns, or aligned in more directions. The array may be two-dimensional, three-dimensional, or more dimensional.

An error correction code is originally used in the communication field, which refers to a code that can find or correct an error by itself at a receiving end after the error occurs during transmission, and also called channel coding. In a case where the error correction code is used for storage, the error correction code is a code that can detect errors or corruptions in stored data and can correct errors. The error correction code encoding algorithm may refer to that in order to make the error correction code have error detection or correction capability, it is necessary to add extra code elements to original codewords to expand the difference between codewords. That is, the original codewords are changed to codewords with a certain degree of redundancy according to a certain rule, and there is a certain relationship between codes of each codeword. The establishment of the relationship is called encoding, and the calculation method of encoding is called an encoding algorithm. In this embodiment, the error correction code encoding algorithm used in each of the rows or the columns may be different.

A check fragment may refer to a fragment that can determine whether a data fragment is in error and can correct the data fragment, including a global check fragment and a local check fragment. The global check fragment may refer to a fragment that can check and correct all data fragments divided by original data. Using a global check fragment can find and correct errors in any one of all data fragments. The local check fragment may refer to a fragment that can check and correct only a part of all data fragments, including row check fragments and column check fragments. A row check fragment may refer to a check fragment used to check data fragments in a row in which the row check fragment is located. A column check fragment may refer to a check fragment used to check data fragments in a column in which the column check fragment is located.

In this embodiment, encoding a data fragment by using an error correction code encoding algorithm to obtain a check fragment may refer to performing mathematical calculation on data in the data fragment according to the error correction code encoding algorithm, and an obtained calculation result is data that constitutes the check fragment. In this embodiment, storing the X data fragments, the M row check fragments and the N column check fragments may refer to storing these fragments in one or more network nodes. These fragments may be stored separately in different nodes, or some of them may be stored in the same node.

The following description is based on another embodiment of the present application. This embodiment is a specific example of the embodiment of FIG. 1 and may include one or more features in one or more of all the embodiments described above.

In this embodiment, in a case where data of at least one of the X data fragments is damaged, a damaged data fragment is recovered, by reading an undamaged data fragment(s) and a row check fragment in a row where the damaged data fragment is located and using an error correction code decoding algorithm of the row; or, the damaged data fragment is recovered, by reading undamaged data fragment(s) and a column check fragment in a column where the damaged data fragment is located and using an error correction code decoding algorithm of the column.

According to this embodiment, by reading the row or column data fragment and the check fragment to recovery the damaged fragment, the fragment may be recovered from different dimensions, thereby increasing the number of recoverable fragments, and reducing the number of read fragments and the computational cost.

In this embodiment, the error correction code decoding algorithm may refer to that, in a case where the data fragments being checked, whether the data of the data fragments is wrong is determined according to whether an encoding rule is satisfied. In a case where the encoding rule is not satisfied, the location of the error is determined and the error is corrected according to a certain rule. The process of correcting the error and recovering the original data is called decoding. The calculation method of decoding is called a decoding algorithm.

In this embodiment, recovering a damaged data fragment, by reading an undamaged data fragment(s) and a row check fragment in a row where the damaged data fragment is located and using an error correction code decoding algorithm of the row, may refer to that a mathematical calculation is performed on the undamaged data fragment(s) and data of the row check fragment in the row according to the error correction code decoding algorithm, and an obtained calculation result includes original data in the damaged data fragment. In this embodiment, recovering a damaged data fragment, by reading an undamaged data fragment(s) and a column check fragment in a column where the damaged data fragment is located and using an error correction code decoding algorithm of the column, may refer to that a mathematical calculation is performed on the undamaged data fragment(s) and data of the column check fragment in the column according to the error correction code decoding algorithm, and an obtained calculation result includes original data in the damaged data fragment.

The following description is based on another embodiment of the present application. This embodiment is a specific example of the embodiment of FIG. 1 and may include one or more features in one or more of all the embodiments described above.

In this embodiment, the storing the X data fragments, the M row check fragments and the N column check fragments, includes:

storing the X data fragments, the M row check fragments and the N column check fragments in different network nodes, respectively.

According to this embodiment, storing multiple fragments such as data fragments and check fragments in different network nodes is beneficial to improving the security of data and reducing the probability of large-scale data corruption.

In this embodiment, the network nodes may refer to nodes constituting a storage network, and the nodes may communicate with each other, such as servers connected to each other. In this embodiment, storing the X data fragments, the M row check fragments and the N column check fragments in different network nodes, respectively, may refer to storing these fragments in X+M+N different network nodes. Each network node stores one of the fragments. It may also refer to storing these fragments in 2 to X+M+N different network nodes, and at least one of the network nodes stores 2 or more fragments.

The following description is based on another embodiment of the present application. This embodiment is a specific example of the embodiment of FIG. 1 and may include one or more features in one or more of all the embodiments described above.

In this embodiment, the error correction code includes at least one of Golay code, Reed-Solomon(RS) code, Reed-Muller(RM) code, Bose-Chaudhuri-Hocquenghem(BCH) code, Low Density Parity Check(LDPC) code, Convolutional code, Turbo code, and the like.

According to this embodiment, these different error correction codes have been proven to be able to effectively recover damaged data, and to improve the security of stored data.

The following description is based on another embodiment of the present application. This embodiment is a specific example of the embodiment of FIG. 1 and may include one or more features in one or more of all the embodiments described above.

In this embodiment, the RS code is generated in a finite field GF (256).

According to the storing method of this embodiment, the encoding and decoding calculation manners may be to calculate in bytes rather than in bits.

In this embodiment, the RS code is a type of BCH code. The definition of the BCH code may be: any finite field GF (q) and its extended field GF ($q^m$) are given, wherein q is a prime number or a power of a prime number, and m is a positive integer. For any code element taken from cyclic codes (n, k) of the extended field GF ($q^m$), which generates a polynomial g(x) with 2t consecutive roots {$a^1$, $a^2$, $a^3$, ..., $a^{2t-1}$,$a^{2t}$}, wherein n=$2^m$-1. Then a cyclic code generated by the g(x) polynomial encoding is called a BCH code in q-ary, and is written as (n, k, t). The RS code may refer to that for any selected positive integer s, a corresponding q-ary BCH code with a code length of n=q-1 may be constructed, wherein a code element symbol is taken from the finite field GF (q), and q is a power of a prime number. In a case where s=1 and q>2, the q-ary BCH code with the code length of n=q-1 is called a Reed-Solomon code, and is referred to as an RS code for short.

In this embodiment, a field is a set on which addition, subtraction, multiplication, and division operations may be performed, and results of these operations will not exceed the field. If a field contains only a limited number of elements, it is called a finite field, also known as a Galois Field. GF (256) may refer to a finite field containing 256 elements. In this embodiment, generating an RS code in GF (256) may refer to that a code element is taken from RS codes in GF (256).

The following description is based on another embodiment of the present application. This embodiment is a specific example of the embodiment of FIG. 1 and may include one or more features in one or more of all the embodiments described above.

In this embodiment, the method further includes:

obtaining a hash value for each of the X data fragments;
and storing the hash value.

According to this embodiment, a hash value is obtained for each data fragment. It may be found whether there is data corruption by checking whether hash values are consistent before and after, and the data fragment where the damage occurred may be located.

In this embodiment, a hash value may refer to a value determined by a hash function (that is, Hash, also known as a digital digest, such as MD5, SHA1, SHA256, and SHA3). In this embodiment, obtaining a hash value for a data fragment may refer to substituting all data in the data fragment into a hash function, and an obtained calculation result is the hash value. In this embodiment, storing the hash value may refer to that the obtained hash value may be stored in one or more network nodes. These network nodes may be the same as or different from the network nodes that store data fragments and check fragments, and may also store at least one backup of the hash value.

Every time a data fragment is read, a hash value of the read data fragment is recalculated, which is compared with the stored hash value. If the comparison is not equal, it means that there is an error in the stored data fragment or hash value (such as a silence error, some bits flipped during hard disk storage). Data errors may be found with certainty by using this method, which is unlike traditional decoding with a need to guess which part of the data is wrong even if the error detection is successful (it is usually to find the nearest valid code in a coding space, but the reliability is far worse than using a hash value to determine).

The following description is based on another embodiment of the present application. This embodiment is a specific example of the embodiment of FIG. 1 and may include one or more features in one or more of all the embodiments described above.

In this embodiment, the method further includes:

encoding the X data fragments using an error correction code encoding algorithm to obtain x global check fragments;
and storing the x global check fragments.

According to this embodiment, in a case where data fragments with a quantity that cannot be recovered by row check fragments and column check fragments are damaged, the global check fragments may participate in the recovery of data fragments with row/column check fragments together, thereby improving the disaster tolerance of data storage.

In this embodiment, the encoding the X data fragments using an error correction code encoding algorithm to obtain x global check fragments, may refer to performing mathematical calculations on data in all of the X data fragments according to the error correction code encoding algorithm, and an obtained calculation result is data that constitutes a global check fragment. In this embodiment, the storing the x global check fragments may refer to that all global check fragments may be stored in one or more network nodes, and the network node(s) may be same as or different from the network nodes that store data fragments and local check fragments.

The following description is based on another embodiment of the present application. This embodiment is a specific example of the embodiment of FIG. 1 and may include one or more features in one or more of all the embodiments described above.

In this embodiment, the method further includes:

encoding the x global check fragments using an error correction code encoding algorithm to obtain at least one local check fragment of global check codes;
and storing the at least one local check fragment.

According to this embodiment, the check and error correction of the global check fragments may be realized. In a case where there are errors and damages in the global check fragments, the global check fragments with errors may be found and their errors may be corrected by the local check fragments of the global check fragments.

In this embodiment, the encoding the x global check fragments using an error correction code encoding algorithm to obtain at least one local check fragment, may refer to performing mathematical calculations on data in all of the x global check fragments according to the error correction code encoding algorithm, and a calculation result is data that constitutes a local check fragment. In this embodiment, the storing the at least one local check fragment may refer to that the obtained at least one local check fragment is stored in one or more network nodes, and may be stored in the same or different network nodes as the various fragments mentioned above.

The following description is based on another embodiment of the present application. This embodiment is a specific example of the embodiment of FIG. 1 and may include one or more features in one or more of all the embodiments described above.

In this embodiment, the method further includes:
calculating the M row check fragments and/or the N column check fragments to obtain y global check fragments.

According to this embodiment, by increasing the number of global check fragments, the security of the data storage system may be improved and more damaged data fragments may be tolerated. The global check fragments calculated by row/column check fragments may be obtained temporarily, and do not need to be stored in advance, thereby reducing the requirements of storage resources for a device.

In this embodiment, calculating the M row check fragments to obtain global check fragments, may refer to performing mathematical calculations on data in all or part of the row check fragments to obtain a global check fragment according to a specific calculation method. In this embodiment, calculating the N column check fragments to obtain global check fragments, may refer to performing mathematical calculations on data in all or part of the column check fragments to obtain a global check fragment according to a specific calculation method. A global check fragment may also be obtained by performing calculations on a partial row check fragments and a partial column check fragments. Different global check fragments may be obtained by performing calculations on different row check fragments / column check fragments.

The following description is based on another embodiment of the present application. This embodiment is a specific example of the embodiment of FIG. 1 and may include one or more features in one or more of all the embodiments described above.

In this embodiment, S120 in the embodiment of FIG. 1 specifically includes:
calculating the row check fragment and the column check fragment respectively by using different segments of an encoding matrix of at least one local check code, the error correction code encoding algorithm being used to calculate an encoding result based on an encoding matrix.

According to this embodiment, a row check fragment and a column check fragment are obtained respectively by using different encoding matrices, which can ensure that two global check fragments, respectively obtained by calculating the row check fragment and the column check fragment, are different from each other, and can play a role of recovering two damaged data fragments.

For example, an encoding matrix may refer to a matrix generated by generating polynomials using code elements, the code elements are taken from a finite field. A segment in an encoding matrix may refer to a segment composed of some elements of the encoding matrix, for example, a segment composed of a row or a column of elements.

In this embodiment, the error correction code encoding algorithm is used to calculate an encoding result based on an encoding matrix, which may refer to that the error correction code encoding algorithm includes first generating an encoding matrix and then calculating the encoding result according to the encoding matrix. In this embodiment, calculating a check fragment by using segments of an encoding matrix may refer to performing mathematical calculations on some code elements (for example, one row) in the encoding matrix and data of one row of data fragments to obtain a row check fragments.

The following description is based on another embodiment of the present application. This embodiment is a specific example of the embodiment of FIG. 1 and may include one or more features in one or more of all the embodiments described above.

In this embodiment, the method further includes:

in a case where data of at least one of the X data fragments is damaged, recovering at least one damaged data fragment, by reading an undamaged data fragment(s) and at least one of the global check fragments (each global check fragment may be a global check fragment stored in advance, or a global check fragment calculated from local check fragments) and using an error correction code decoding algorithm used in calculating the global check fragments.

According to this embodiment, any one of the data fragments may be recovered by using a global check fragment, and thereby the row/column check fragments and other local check fragments may be complemented, and the reliability of data storage may be improved.

In this embodiment, the recovering at least one damaged data fragment by reading an undamaged data fragment(s) and at least one of the global check fragments and using an error correction code decoding algorithm used in calculating the global check fragments, may refer to performing mathematical calculations on data of the undamaged data fragments and the global check fragments according to the error correction code decoding algorithm used in encoding the global check fragments, and an obtained calculation result contains original data in the damaged data fragments.

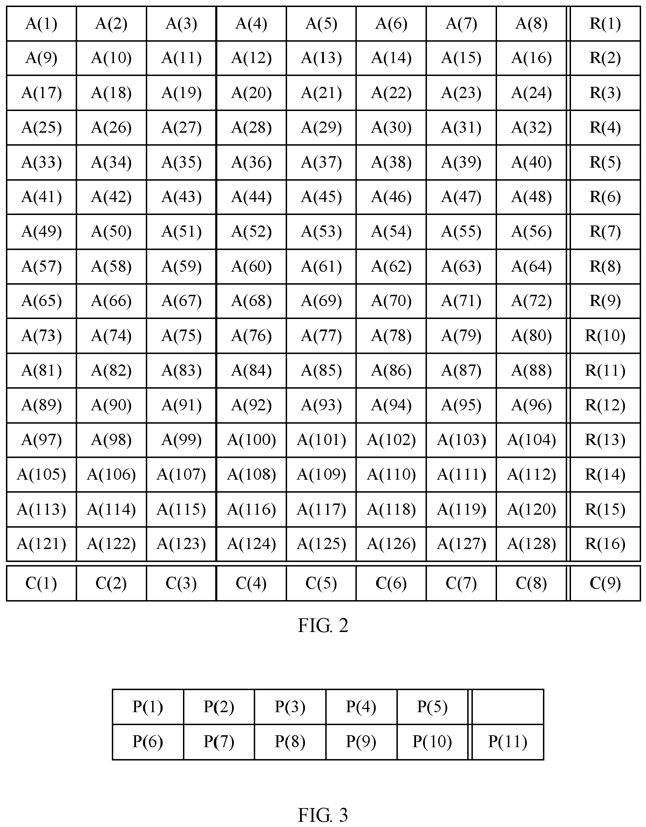

An entire process of a method for storing data according to an embodiment of the present application is described in detail below with reference to FIG. 2 and FIG. 3.

Referring to FIG. 2, data is divided into 128 data fragments, that is, A(1) to A(128), arranged in an $8\times16$ matrix. A row check fragment is generated for each of the rows, that is, R(1) to R(16), and a total of 16 row check fragments. A column check fragment is generated for each of the columns, that is, C(1) to C(8), and a total of 8 column check fragments. A specific calculation process may be as follows:

setting a limited field as GF (256), writing W(n) as the n-th encoding matrix, each encoding matrix having 128 elements, and W(n, m) representing the m-th element of W(n). A calculation formula for a row check fragment is:

$$R(i) \quad = \quad \sum_{j=1}^{8} W(1, 8(i-1)+j) A(8(i-1)+j), \quad i = 1, \cdots, 16$$

A calculation formula for a column check fragment is:

$$C(i) \quad = \quad \sum_{j=1}^{16} W(2, 8(j-1)+i) A(8(j-1)+i), \quad i = 1, \cdots, 8$$

Referring to FIG. 3, data fragments A(1) to A(128) are used to calculate 10 global check fragments P(1) to P(10), wherein P(11) is a local check fragment used to recover the global check fragments.

A calculation formula for the global check fragments is:

$$P(i) \quad = \quad W(i+2) \cdot A^{\top}$$

wherein T means transpose, and

$$P(11) \quad = \quad \sum_{j=1}^{10} P(j)$$

Referring to FIG. 2 again, in a case where a data fragment is damaged, for example, A(1) is damaged, and A(1) may be recovered by reading 7 data fragments A(2) to A(8) in the same row and a row check fragment R(1).

In a case where A(1) and A(2) are damaged, A(1) may be recovered firstly by reading all undamaged data fragments and a column check fragment C(1) in a column where A(1) is located, and then A(2) may be recovered by reading undamaged fragments A(3) to A(8) in the same row and a row check fragment R(1).

In a case where A(1), A(2) and A(9) are damaged, A(9) may be recovered firstly by reading undamaged fragments (that is, A(10) to A(16)) and a row check fragment R(2) in a row where A(9) is located, then A(1) may be recovered by reading undamaged fragments and a column check fragment in a column where A(1) is located, and finally A(2) may be recovered by reading undamaged fragments and a row check fragment in a row where A(2) is located.

In a case where A(1), A(2), A(9) and A(10) are damaged, global check fragments should be read at this time. For example, all damaged data fragments may be recovered by reading all undamaged 124 data fragments and 4 global check fragments P(1) to P(4). In a case where using global check fragments to recovery data, it is necessary to ensure that the sum of the number of global check fragments and undamaged data fragments is not less than the number of original data fragments.

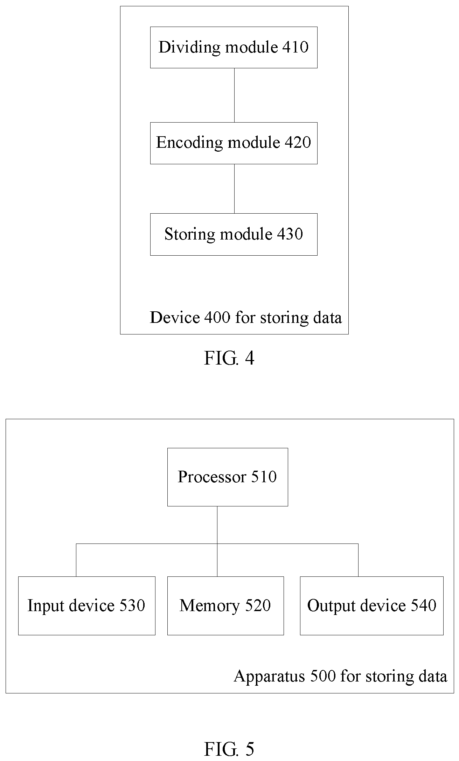

FIG. 4 shows a schematic structural block diagram illustrating a device for storing data according to an embodiment of the present application.

According to this embodiment, the device 400 for storing data includes:

a dividing module 410, configured to divide the data into X data fragments, the X data fragments forming an array including m rows and n columns, each of the rows including at least one and at most n data fragments, and each of the columns including at least one and at most m data fragments, wherein X, m, n are all positive integers greater than or equal to 2;

an encoding module 420, configured to encode at least one of the data fragments in the each of the rows using an error correction code encoding algorithm to obtain at least one row check fragment, a total of M row check fragments being obtained, and encode at least one of the data fragments in the each of the columns using an error correction code encoding algorithm to obtain at least one column check fragment, a total of N column check fragments being obtained, wherein M≥m, N≥n;

and a storing module 430, configured to store the X data fragments, the M row check fragments and the N column check fragments.

In an embodiment, the device 400 for storing data further includes:
a first recovering module, configured to, in a case where data of at least one of the X data fragments is damaged, recover a damaged data fragment, by reading an undamaged data fragment(s) and a row check fragment in a row where the damaged data fragment is located and using an error correction code decoding algorithm of the row; or, recover the damaged data fragment, by reading undamaged data fragment(s) and a column check fragment in a column where the damaged data fragment is located and using an error correction code decoding algorithm of the column.

In an embodiment, the storing module 430 is configured to:
storing the X data fragments, the M row check fragments and the N column check fragments in different network nodes, respectively.

In an embodiment, the device 400 for storing data further includes:

a calculating hash values module configured to obtain a hash value for each of the X data fragments;
and a storing hash values module configured to store the hash value.

In an embodiment, the device 400 for storing data further includes:

a first calculating global check fragments module configured to encode the X data fragments using an error correction code encoding algorithm to obtain x global check fragments;
and a storing global check fragments module, configured to store the x global check fragments.

In an embodiment, the device 400 for storing data further includes:

a calculating local check fragments module configured to encode the x global check fragments using an error correction code encoding algorithm to obtain at least one local check fragment of global check codes;
and a storing local check fragments module configured to store the at least one local check fragment.

In an embodiment, the device 400 for storing data further includes:
a second calculating global check fragments module configured to calculate the M row check fragments and/or the N column check fragments to obtain y global check fragments.

In an embodiment, the encoding module 420 is configured to:
calculating the row check fragment and the column check fragment respectively by using different segments of an encoding matrix of at least one local check code, the error correction code encoding algorithm being used to calculate an encoding result based on an encoding matrix.

In an embodiment, the device 400 for storing data further includes:
a second recovering module, configured to: in a case where data of at least one of the X data fragments is damaged, recover at least one damaged data fragment, by reading an undamaged data fragment(s) and at least one of the global check fragments and using an error correction code decoding algorithm used in calculating the global check fragments.

FIG. 5 shows a block diagram illustrating an apparatus for storing data according to an embodiment of the present application. Hereinafter, an apparatus for storing data according to embodiments of the present application is described with reference to FIG. 5.

As shown in FIG. 5, an apparatus 500 for storing data includes one or more processors 510 and a memory 520.

The processor 510 may be a central processing unit (CPU) or a processing unit in another form with a data processing capacity and/or instruction execution capacity, and may control other components in the apparatus 500 for storing data to perform expected functions.

The memory 520 may include one or more computer program products. The computer program product may include various forms of computer readable storage media, for example, a volatile memory and/or a non-volatile memory. The volatile memory may include, for example, a random access memory (RAM) and/or a cache. The non-volatile memory may include, for example, a read-only memory (ROM), a hard disk, a flash memory, and the like. The computer readable storage medium can store one or more computer program instructions, and the processor 510 can execute the program instructions to implement a method for storing data in each embodiment of the present application described above and/or other expected functions.

In an example, the apparatus 500 for storing data may further include an input device 530 and an output device 540, and these components are interconnected through a bus system and/or other forms of connection mechanisms (not shown).

For example, the input device 530 may be a microphone or a microphone array for capturing voice input signals; it may be a communication network connector for receiving the collected input signals from the cloud or other devices; it may also include, for example, a keyboard, a mouse, etc.

The output device 540 can output various kinds of information to the outside, including determined distance information, direction information, and the like. The output device 540 may include, for example, a display, a speaker, a printer, and a communication network and remote output devices connected to the communication network.

Certainly, for simplification, FIG. 5 shows only some of the components related to the present application in the apparatus 500 for storing data, and the components such as a bus and an input/output interface are omitted. In addition, according to a specific application case, the apparatus 500 for storing data may further include any other suitable components.

In addition to the method and the apparatus described above, embodiments of the present application may also be a computer readable storage medium, and computer program instructions are stored on the computer readable storage medium. In a case where the computer program instructions are operated by a processor, the processor is enabled to perform the steps in the method for storing data according to various embodiments of the present application described in the "exemplary method" section in the specification.

The computer readable storage medium may adopt one readable medium or any combination of multiple readable media. The readable medium may be a readable signal medium or a readable storage medium. The readable storage medium may be, but not limited to, for example, electric, magnetic, optical, electromagnetic, infrared or semiconductor systems, devices or apparatuses or any combination thereof. A more specific example (non-exhausted list) of the readable storage medium includes: an electrical connection with one or more wires, a portable disk, a hard disk, a Random Access Memory (RAM), a Read-Only Memory (ROM), an Erasable Programmable ROM (EPROM or flash) memory, an optical fiber, a portable CD-ROM, an optical storage device, a magnetic storage device or any proper combination thereof.

The concepts, principles, and ideas of the present application have been described in detail above in connection with specific implementations (including example rights and examples). Those skilled in the art should understand that the example of the present application are not limited to the above- mentioned forms, and those skilled in the art can make any possible improvements, substitutions, and equivalents to the steps, methods, devices, and components in the above exemplary after reading the present application. These improvements, substitutions, and equivalents should be considered as falling into the scope of the present application. The protection scope of the present application is defined only by the claims.

## Claims

1. A method for storing data, comprising:

dividing the data into X data fragments, the X data fragments forming an array comprising m rows and n columns, each of the rows comprising at least one and at most n data fragments, and each of the columns comprising at least one and at most m data fragments, each of X, m, n being a positive integer greater than or equal to 2; encoding at least one of the data fragments in the each of the rows using an error correction code encoding algorithm to obtain at least one row check fragment, a total of M row check fragments being obtained, and encoding at least one of the data fragments in the each of the columns using an error correction code encoding algorithm to obtain at least one column check fragment, a total of N column check fragments being obtained, M≥m, N≥n; and

storing the X data fragments, the M row check fragments and the N column check fragments.

2. The method according to claim 1, further comprising:
in a case one of the X data fragments located in row i is damaged, recovering the damaged data fragment by the undamaged data fragment(s) of row i and the row check fragment of row i, using the error correction code decoding algorithm of row i.

3. The method according to claim 1, further comprising:
in a case one of the X data fragments located in column j is damaged, recovering the damaged data fragment by the undamaged data fragment(s) of column j and the column check fragment of column j, using the error correction code decoding algorithm of column j.

4. The method according to any one of claims 1 to 3, wherein the storing the X data fragments, the M row check fragments and the N column check fragments, comprises:
storing the X data fragments, the M row check fragments and the N column check fragments in different nodes, respectively.

5. The method according to any one of claims 1 to 4, wherein the error correction code comprises at least one of Golay code, Reed-Solomon code, Reed-Muller code, Bose-Chaudhuri-Hocquenghem code, Low Density Parity Check code, Convolutional code, and Turbo code.

6. The method according to claim 5, wherein the Reed-Solomon code is generated in a finite field GF (256).

7. The method according to any one of claims 1 to 6, further comprising:

obtaining a hash value for each of the X data fragments;
storing the hash value; and
when reading a data fragment, obtaining the hash value of read data and comparing with stored hash value to obtain a comparing result, and judging the data fragment as damaged if the comparing result is not equal.

8. The method according to any one of claims 1 to 7, further comprising:

encoding the X data fragments using an error correction code encoding algorithm to obtain x global check fragments; and
storing the x global check fragments.

9. The method according to claim 8, further comprising:

encoding the x global check fragments using an error correction code encoding algorithm to obtain at least one local check fragment of global check codes; and
storing the at least one local check fragment.

10. The method according to any one of claims 1 to 9, further comprising:
calculating the M row check fragments and/or the N column check fragments to obtain y global check fragments.

11. The method according to any one of claims 1 to 10, wherein the encoding at least one of the data fragments in the each of the rows using an error correction code encoding algorithm to obtain at least one row check fragment, a total of M row check fragments being obtained, and encoding at least one of the data fragments in the each of the columns using an error correction code encoding algorithm to obtain at least one column check fragment, a total of N column check fragments being obtained, wherein M≥m, N≥n, comprises:
calculating the row check fragment and the column check fragment respectively by using different segments of an encoding matrix of at least one local check code, the error correction code encoding algorithm being used to calculate an encoding result based on an encoding matrix.

12. The method according to any one of claims 8 to 11, further comprising:

in a case one of the X data fragments is damaged, recovering the damaged data fragment by the undamaged data fragment(s) and at least one of the global check fragments, using the decoding algorithm of error correction code for the global check fragments.

13. A device (400) for storing data, comprising:

a dividing module (410), configured to divide the data into X data fragments, the X data fragments forming an array comprising m rows and n columns, each of the rows comprising at least one and at most n data fragments, and each of the columns comprising at least one and at most m data fragments, each of X, m, n being a positive integer greater than or equal to 2;

an encoding module (420), configured to encode at least one of the data fragments in the each of the rows using an error correction code encoding algorithm to obtain at least one row check fragment, a total of M row check fragments being obtained, and encode at least one of the data fragments in the each of the columns using an error correction code encoding algorithm to obtain at least one column check fragment, a total of N column check fragments being obtained, M≥m, N≥n; and

a storing module (430), configured to store the X data fragments, the M row check fragments and the N column check fragments.

14. A computer readable storage medium storing a computer program, wherein the computer program is configured to execute the method for storing data of according to any one of claims 1 to 12.

15. An apparatus (500) for storing data, comprising:

a processor (510); and

a memory (520), configured to store executable instructions of the processor (510);

wherein the processor (510) is configured to execute the method for storing data of according to any one of claims 1 to 12.

| dividing the data into X data fragments, the X data fragments forming an array including m rows and n columns, each of the rows including at least one and at most n data fragments, and each of the columns including at least one and at most m data fragments, wherein each of X, m, n is a positive integer greater than or equal to 2 | S110 |

| encoding at least one of the data fragments in the each of the rows using an error correction code encoding algorithm to obtain at least one row check fragment, a total of M row check fragments being obtained, and encoding at least one of the data fragments in the each of the columns using an error correction code encoding algorithm to obtain at least one column check fragment, a total of N column check fragments being obtained, wherein M≥m, N≥n | S120 |

| storing the X data fragments, the M row check fragments and the N column check fragments | S130 |

FIG. 1

| A(1) | A(2) | A(3) | A(4) | A(5) | A(6) | A(7) | A(8) | R(1) |
|------|------|------|------|------|------|------|------|------|
| A(9) | A(10) | A(11) | A(12) | A(13) | A(14) | A(15) | A(16) | R(2) |
| A(17) | A(18) | A(19) | A(20) | A(21) | A(22) | A(23) | A(24) | R(3) |
| A(25) | A(26) | A(27) | A(28) | A(29) | A(30) | A(31) | A(32) | R(4) |
| A(33) | A(34) | A(35) | A(36) | A(37) | A(38) | A(39) | A(40) | R(5) |
| A(41) | A(42) | A(43) | A(44) | A(45) | A(46) | A(47) | A(48) | R(6) |
| A(49) | A(50) | A(51) | A(52) | A(53) | A(54) | A(55) | A(56) | R(7) |
| A(57) | A(58) | A(59) | A(60) | A(61) | A(62) | A(63) | A(64) | R(8) |
| A(65) | A(66) | A(67) | A(68) | A(69) | A(70) | A(71) | A(72) | R(9) |
| A(73) | A(74) | A(75) | A(76) | A(77) | A(78) | A(79) | A(80) | R(10) |
| A(81) | A(82) | A(83) | A(84) | A(85) | A(86) | A(87) | A(88) | R(11) |
| A(89) | A(90) | A(91) | A(92) | A(93) | A(94) | A(95) | A(96) | R(12) |
| A(97) | A(98) | A(99) | A(100) | A(101) | A(102) | A(103) | A(104) | R(13) |
| A(105) | A(106) | A(107) | A(108) | A(109) | A(110) | A(111) | A(112) | R(14) |
| A(113) | A(114) | A(115) | A(116) | A(117) | A(118) | A(119) | A(120) | R(15) |
| A(121) | A(122) | A(123) | A(124) | A(125) | A(126) | A(127) | A(128) | R(16) |
| C(1) | C(2) | C(3) | C(4) | C(5) | C(6) | C(7) | C(8) | C(9) |

FIG. 2

| P(1) | P(2) | P(3) | P(4) | P(5) | |
|------|------|------|------|------|------|
| P(6) | P(7) | P(8) | P(9) | P(10) | P(11) |

FIG. 3

Dividing module 410

Encoding module 420

Storing module 430

Device 400 for storing data

FIG. 4

Processor 510

Input device 530

Memory 520

Output device 540

Apparatus 500 for storing data

FIG. 5

Europäisches
Patentamt

European
Patent Office

Office européen
des brevets

# EUROPEAN SEARCH REPORT

Application Number

EP 21 15 1347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DORIANE PERARD ET AL: "Erasure code-based low storage blockchain node", ARXIV.ORG, CORNELL UNIVERSITY LIBRARY, 201 OLIN LIBRARY CORNELL UNIVERSITY ITHACA, NY 14853, 2 May 2018 (2018-05-02), XP080885001, * paragraph [00II] - paragraph [00VI] * | 1-15 | INV. H03M13/11 G06F21/62 |
| A | MITRA DEBARNAB ET AL: "Patterned Erasure Correcting Codes for Low Storage-Overhead Blockchain Systems", 2019 53RD ASILOMAR CONFERENCE ON SIGNALS, SYSTEMS, AND COMPUTERS, IEEE, 3 November 2019 (2019-11-03), pages 1734-1738, XP033750747, DOI: 10.1109/IEEECONF44664.2019.9048887 [retrieved on 2020-03-26] * paragraph [00II] - paragraph [0III] * | 1-15 | |

TECHNICAL FIELDS
SEARCHED (IPC)

H03M

The present search report has been drawn up for all claims

| Place of search | Date of completion of the search | Examiner |
|---|---|---|
| Munich | 31 May 2021 | Bec, Thierry |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P04C01)